# EUROPÄISCHE PATENTANMELDUNG

(11) **EP 3 639 980 A1**
(43) Veröffentlichungstag der Anmeldung: **22.04.2020**
(21) Anmeldenummer: 19207247.8
(22) Anmeldetag: 06.09.2017
(51) Int. Cl.: B25J 5/02, B25J 9/04, B25J 11/00, B23Q 1/48, B23Q 1/54, B23C 3/12

(54) **SPINDELTRÄGERBAUGRUPPE ZUM EINSATZ AN EINER WERKZEUGMASCHINE SOWIE WERKZEUGMASCHINE ZUR SPANENDEN BEARBEITUNG EINES WERKSTÜCKS MIT EINER DERARTIGEN SPINDELTRÄGERBAUGRUPPE**

(30) Priorität: 06.09.2016 DE 102016216902
(62) Teilanmeldung aus: 17189657.4
(71) Anmelder: DECKEL MAHO Pfronten GmbH, 87459 Pfronten (DE)
(72) Erfinder: KSCHIER, Uwe, 87629 Füssen (DE); GEIßLER, Alfred, 87459 Pfronten (DE)
(74) Vertreter: MERH-IP Matias Erny Reichl Hoffmann Patentanwälte PartG mbB

(57) **Zusammenfassung**

Die vorliegende Erfindung betrifft eine Spindelträgerbaugruppe 200 zum Einsatz an einer Werkzeugmaschine 100 sowie eine Werkzeugmaschine 100 zur spanenden Bearbeitung eines Werkstücks mit einer derartigen Spindelträgerbaugruppe 200. Die Spindelträgerbaugruppe 200 zum Einsatz an einer Werkzeugmaschine 100 umfasst einen auf einem Maschinenbett 110 angeordneten Schwenkarmaufnahmeabschnitt 220, einen an dem Schwenkarmaufnahmeabschnitt um eine erste Rotationsachse schwenkbar gelagerten ersten Schwenkarm 230, einen an dem ersten Schwenkarm um eine zweite Rotationsachse schwenkbar gelagerten zweiten Schwenkarm 240, einen an dem zweiten Schwenkarm um eine dritte Rotationsachse drehbar gelagerten Spindelträgerarm 250, einen an dem Spindelträgerarm um eine vierte Rotationsachse drehbar gelagerten Fräskopf 260, und eine an dem Fräskopf gehaltenen Arbeitsspindel 210 zur Aufnahme eines Werkzeugs, wobei die dritte Rotationsachse (R3) senkrecht oder quer zur vierten Rotationsachse (R4) ausgerichtet ist, und wobei der Schwenkarmaufnahmeabschnitt (220) auf einem Achsschlitten (223) angeordnet ist, der auf dem Maschinenbett (110) in einer zur ersten Rotationsachse (R1) parallel ausgerichteten Richtung (X) linear verfahrbar ist, und wobei der Schwenkarmaufnahmeabschnitt (220) zwei Schwenkarmhaltekörper (221, 222) zur schwenkbar gelagerten Halterung des ersten Schwenkarms (230) aufweist, die in der Verfahrrichtung (X) des Achsschlitten (223) nebeneinander auf dem Achsschlitten (223) angeordnet sind.

## Beschreibung

### BESCHREIBUNG

Die vorliegende Erfindung betrifft eine Spindelträgerbaugruppe zum Einsatz an einer derartigen Werkzeugmaschine sowie eine Werkzeugmaschine zur spanenden Bearbeitung eines Werkstücks mit einer derartigen Spindelträgerbaugruppe.

### HINTERGRUND DER ERFINDUNG

Im Stand der Technik sind Werkzeugmaschinen mit werkzeugtragender Arbeitsspindel bekannt. Diese sind heutzutage zumeist mit numerischen Steuerungen versehen und z.B. als Fräsmaschinen, Fräszentren, Universal-Fräsmaschinen oder CNC-Bearbeitungszentren mit vier, fünf oder manchmal auch mehr als fünf numerisch ansteuerbaren Linear- und/oder Dreh- bzw. Schwenkachsen bekannt, siehe hierzu z.B. die Werkzeugmaschine gemäß DE 10 2010 064 271 A1.

Abzugrenzen sind derartige Werkzeugmaschinen mit werkzeugtragender Arbeitsspindel von Werkzeugmaschinen mit werkstücktragender Arbeitsspindel, wie z.B. Drehmaschinen, Drehzentren, Doppelspindel-Drehmaschinen, Mehrfachspindel-Drehmaschinen oder Mehrfachspindel-Drehautomaten.

Bei derartigen Werkzeugmaschinen, insbesondere Fräsmaschinen, Fräszentren, Universal-Fräsmaschinen oder CNC-Bearbeitungszentren, wird die Arbeitsspindel zumeist mittels mehrerer Linearachsen in verschiedene Richtung bewegt (z.B. Fahrständerfräsmaschine). Dies ist insbesondere für die Bearbeitung kubischer oder annähernd kubischer Werkstücke geeignet.

Es ist eine grundsätzliche Aufgabe auf dem Gebiet des Werkzeugmaschinenbaus als auch insbesondere eine zugrunde liegende Aufgabe der vorliegenden Erfindung, eine Werkzeugmaschine mit werkzeugtragender Arbeitsspindel, insbesondere eine Werkzeugmaschine für fräsende und/oder bohrende Bearbeitung eines Werkstücks, bereitzustellen, die gleichzeitig präzise und zuverlässig mit möglichst kleinen Standzeiten arbeitet, als auch kostengünstig, kompakt und effizient bereitgestellt werden kann.

Insbesondere auf dem Gebiet des Ausführens von Fräsarbeiten an Werkstücken aus Verbundwerkstoff, insbesondere kohlenstofffaserverstärktem Kunststoff bzw. CFK, sind flexiblere und gleichzeitig genaue Bearbeitungen bei hohen Stückzahlen erforderlich. Für die Bearbeitung derartiger Bauteile, insbesondere größerer Bauteile, für die Industrieroboter nicht verwendet werden können, wird ein Maschinenkonzept benötigt, das eine hohe Bearbeitungsbewegungsflexibilität bei hohen Freiheitsgraden hoher Steifigkeit und hoher Bearbeitungsgenauigkeit sowie -effizienz ermöglicht.

Es ist somit eine Aufgabe der vorliegenden Erfindung, eine Spindelträgerbaugruppe und eine Werkzeugmaschine zu schaffen bzw. vorzuschlagen, die eine Maschinenkinematik mit hoher Steifigkeit der Bauteile aufweist und gleichzeitig eine hohe Bewegungsflexibilität mit hohen Freiheitsgraden sowie eine hohe Bearbeitungsgenauigkeit bzw. Steuerungspräzision ermöglicht, und zudem eine effiziente, genaue und einfache Werkstückbearbeitung ermöglicht, insbesondere für das Ausführen von Fräsarbeiten an kleinen und großen Werkstücken aus Verbundwerkstoff, insbesondere kohlenstofffaserverstärktem Kunststoff bzw. CFK, an Freiformflächen.

### ZUSAMMENFASSUNG DER ERFINDUNG

Gemäß der vorliegenden Erfindung wird zur Lösung der vorstehend genannten Aufgaben eine Spindelbauträgergruppe gemäß Anspruch 1 sowie eine Werkzeugmaschine nach Anspruch 14 vorgeschlagen. Die abhängigen Ansprüche betreffen bevorzugte Ausführungsbeispiele der Erfindung.

Insbesondere wird eine Spindelträgerbaugruppe zum Einsatz an einer Werkzeugmaschine bereitgestellt, wobei die Spindelträgerbaugruppe bevorzugt aufweist: einen auf dem Maschinenbett angeordneten Schwenkarmaufnahmeabschnitt, einen an dem Schwenkarmaufnahmeabschnitt um eine erste Rotationsachse schwenkbar gelagerten ersten Schwenkarm, einen an dem ersten Schwenkarm um eine zweite Rotationsachse schwenkbar gelagerten zweiten Schwenkarm, einen an dem zweiten Schwenkarm um eine dritte Rotationsachse drehbar gelagerten Spindelträgerarm, einen an dem Spindelträgerarm um eine vierte Rotationsachse drehbar gelagerten Fräskopf, und eine an dem Fräskopf gehaltene Arbeitsspindel zur Aufnahme eines Werkzeugs, wobei die dritte Rotationsachse senkrecht oder quer zur vierten Rotationsachse ausgerichtet ist, und wobei der Schwenkarmaufnahmeabschnitt auf einem Achsschlitten angeordnet ist, der auf dem Maschinenbett in einer zur ersten Rotationsachse parallel ausgerichteten Richtung linear verfahrbar ist, und wobei der Schwenkarmaufnahmeabschnitt zwei Schwenkarmhaltekörper zur schwenkbar gelagerten Halterung des ersten Schwenkarms aufweist, die in der Verfahrrichtung des Achsschlitten nebeneinander auf dem Achsschlitten angeordnet sind.

Dies ermöglicht somit eine freiere Bewegung mit weniger Bauteilen und freierem Bearbeitungsraum mit einer größeren Bewegungsfreiheit im Arbeitsraum bei gleichen Freiheitsgraden einer Vier- oder Fünf-Achs-Fräsmaschine herkömmlicher Bauweise. Gleichzeitig können hochsteife Baugruppen mit hochpräzisen Antrieben und Schwenk- bzw. Rundachsen bereitgestellt werden, so dass gleiche bzw. sogar höhere Bearbeitungsgenauigkeiten erreicht werden können, wie bei Vier- oder Fünf-Achs-Fräsmaschinen herkömmlicher Bauweise (Fahrständerfräsmaschine).

Insbesondere ermöglicht es die vorliegende Erfindung, ein Werkzeugmaschinenkonzept zu schaffen bzw. bereitzustellen, die eine Maschinenkinematik mit hoher Steifigkeit der Bauteile aufweist und gleichzeitig eine hohe Bewegungsflexibilität mit hohen Freiheitsgraden sowie eine hohe Bearbeitungsgenauigkeit bzw. Steuerungspräzision ermöglicht, und zudem eine effiziente, genaue und einfache Werkstückbearbeitung ermöglicht, insbesondere für das Ausführen von Fräsarbeiten an kleinen und großen Werkstücken aus Verbundwerkstoff, insbesondere kohlenstofffaserverstärktem Kunststoff bzw. CFK, an Freiformflächen.

Insbesondere kann somit ein Werkzeugmaschinenkonzept bereitgestellt werden, die bei dem Ausführen von Fräsarbeiten an Werkstücken aus Verbundwerkstoff, insbesondere kohlenstofffaserverstärktem Kunststoff bzw. CFK, flexiblere und gleichzeitig genaue Bearbeitungen bei hohen Stückzahlen ermöglicht. Es wird ein Maschinenkonzept bereitgestellt, das eine hohe Bearbeitungsbewegungsflexibilität bei hohen Freiheitsgraden hoher Steifigkeit (insbesondere da der erste Schwenkarm zwischen den beiden Schwenkarmhaltekörpern schwenkbar gelagert gehalten ist) und hoher Bearbeitungsgenauigkeit sowie -effizienz ermöglicht.

In zweckmäßigen bevorzugten Ausführungsbeispielen ist die zweite Rotationsachse parallel zur ersten Rotationsachse ausgerichtet. In zweckmäßigen bevorzugten Ausführungsbeispielen ist die dritte Rotationsachse senkrecht oder quer zur zweiten Rotationsachse ausgerichtet. In zweckmäßigen bevorzugten Ausführungsbeispielen ist eine Spindelachse der Arbeitsspindel senkrecht oder quer zur vierten Rotationsachse ausgerichtet.

In zweckmäßigen bevorzugten Ausführungsbeispielen ist ein Werkzeugspannabschnitt relativ zu dem Schwenkarmaufnahmeabschnitt auf dem Maschinenbett in zumindest einer Linearachsrichtung linear verfahrbar angeordnet.

Dies ermöglicht somit eine freiere Bewegung mit weniger Bauteilen und freierem Bearbeitungsraum mit einer größeren Bewegungsfreiheit im Arbeitsraum bei gleichen Freiheitsgraden einer Fünf-Achs-Fräsmaschine herkömmlicher Bauweise. Gleichzeitig können hochsteife Baugruppen mit hochpräzisen Antrieben und Schwenk- bzw. Rundachsen bereitgestellt werden, so dass gleiche bzw. sogar höhere Bearbeitungsgenauigkeiten erreicht werden können, wie bei Fünf-Achs-Fräsmaschinen herkömmlicher Bauweise (Fahrständerfräsmaschine).

In zweckmäßigen bevorzugten Ausführungsbeispielen ist einer der Schwenkarmhaltekörper kleiner ausgebildet, als der andere Schwenkarmhaltekörper der beiden Schwenkarmhaltekörper, wobei der zweite Schwenkarm bevorzugt an der dem kleineren Schwenkarmhaltekörper zugewandten Seite des ersten Schwenkarms gehalten ist. Dies verbessert die Bewegungsfreiheit der Schwenkbewegungen insbesondere der beiden Schwenkarme.

In zweckmäßigen bevorzugten Ausführungsbeispielen weist jeder der beiden Schwenkarmhaltekörper des Schwenkarmaufnahmeabschnitts zumindest einen Antrieb zum Antreiben einer Schwenkbewegung des ersten Schwenkarms auf. Dies verbessert die Steifigkeit des Aufbaus, die Gleichmäßigkeit der Schwenksteuerung und die erreichbare Genauigkeit bei der Bearbeitung.

In zweckmäßigen bevorzugten Ausführungsbeispielen weist jeder der beiden Schwenkarmhaltekörper des Schwenkarmaufnahmeabschnitts zumindest ein verspanntes Getriebe zum Übertragen eines Drehmoments beim Antreiben einer Schwenkbewegung des ersten Schwenkarms auf. Dies verbessert die Gleichmäßigkeit der Schwenksteuerung und die erreichbare Genauigkeit bei der Bearbeitung.

In zweckmäßigen bevorzugten Ausführungsbeispielen weist der erste Schwenkarm zumindest einen Antrieb zum Antreiben einer Schwenkbewegung des zweiten Schwenkarms auf. In zweckmäßigen bevorzugten Ausführungsbeispielen weist der erste Schwenkarm zumindest ein verspanntes Getriebe zum Übertragen eines Drehmoments beim Antreiben einer Schwenkbewegung des zweiten Schwenkarms auf.

In zweckmäßigen bevorzugten Ausführungsbeispielen weist jedes der verspannten Getriebe zumindest ein angetriebenes Antriebselement und zumindest zwei antreibende Antriebselemente auf, die gleichzeitig mit dem angetriebenen Antriebselement zusammenwirken. Dies verbessert die Gleichmäßigkeit der Schwenksteuerung und die erreichbare Genauigkeit bei der Bearbeitung.

In zweckmäßigen bevorzugten Ausführungsbeispielen weist der zweite Schwenkarm zumindest einen Antrieb zum Antreiben einer Rotationsbewegung des Spindelträgerarms auf. In zweckmäßigen bevorzugten Ausführungsbeispielen ist der Antrieb zum Antreiben der Rotationsbewegung des Spindelträgerarms als Torqueantrieb, insbesondere gekühlter Torqueantrieb, ausgebildet. Dies verbessert die Gleichmäßigkeit der Drehsteuerung und die erreichbare Genauigkeit bei der Bearbeitung.

In zweckmäßigen bevorzugten Ausführungsbeispielen weist der Spindelträgerarm zumindest einen Antrieb zum Antreiben einer Rotationsbewegung des Fräskopfs auf. In zweckmäßigen bevorzugten Ausführungsbeispielen ist der Antrieb zum Antreiben der Rotationsbewegung des Fräskopfs als Torqueantrieb, insbesondere gekühlter Torqueantrieb, ausgebildet. Dies verbessert die Gleichmäßigkeit der Drehsteuerung und die erreichbare Genauigkeit bei der Bearbeitung.

In zweckmäßigen bevorzugten Ausführungsbeispielen umfasst die Werkzeugmaschine ein Werkzeugmagazin zum Lagern von einer Mehrzahl von Werkzeugen zum Ein- bzw. Auswechseln von Werkzeugen an der Arbeitsspindel.

In zweckmäßigen bevorzugten Ausführungsbeispielen ist zusätzlich zu einer ersten Spindelträgerbaugruppe, die den Schwenkarmaufnahmeabschnitt, den ersten Schwenkarm, den zweiten Schwenkarm, den Spindelträgerarm, den Fräskopf und die Arbeitsspindel umfasst, eine zweite Spindelträgerbaugruppe auf dem Maschinenbett angeordnet.

In zweckmäßigen bevorzugten Ausführungsbeispielen umfasst die zweite Spindelträgerbaugruppe: einen auf einem Maschinenbett der Werkzeugmaschine angeordneten zweiten Schwenkarmaufnahmeabschnitt, einem an dem zweiten Schwenkarmaufnahmeabschnitt um eine fünfte Rotationsachse schwenkbar gelagerten dritten Schwenkarm, einem an dem dritten Schwenkarm um eine sechste Rotationsachse schwenkbar gelagerten vierten Schwenkarm, einem an dem vierten Schwenkarm um eine siebte Rotationsachse drehbar gelagerten zweiten Spindelträgerarm, einem an dem zweiten Spindelträgerarm um eine achte Rotationsachse drehbar gelagerten zweiten Fräskopf, und/oder einer an dem zweiten Fräskopf gehaltenen zweiten Arbeitsspindel zur Aufnahme eines Werkzeugs, wobei die siebte Rotationsachse bevorzugt senkrecht oder quer zur achten Rotationsachse ausgerichtet ist.

In zweckmäßigen bevorzugten Ausführungsbeispielen sind die erste, zweite, fünfte und sechste Rotationsachse jeweils parallel zueinander ausgerichtet, wobei insbesondere die erste und fünfte Rotationsachse bevorzugt koaxial zueinander ausgerichtet sind.

In zweckmäßigen bevorzugten Ausführungsbeispielen sind die erste und zweite Spindelträgerbaugruppe in der Richtung der ersten und/oder fünften Rotationsachse nebeneinander auf dem Maschinenbett angeordnet.

Gemäß einem weiteren Aspekt wird eine Werkzeugmaschine zur spanenden Bearbeitung eines Werkstücks mit einer erfindungsgemäßen Spindelträgerbaugruppe zum Einsatz an der erfindungsgemäßen Werkzeugmaschine vorgeschlagen.

Zusammenfassend ermöglicht es die vorliegende Erfindung, ein Werkzeugmaschinenkonzept zu schaffen bzw. bereitzustellen, das eine Maschinenkinematik mit hoher Steifigkeit der Bauteile aufweist und gleichzeitig eine hohe Bewegungsflexibilität mit hohen Freiheitsgraden sowie eine hohe Bearbeitungsgenauigkeit bzw. Steuerungspräzision ermöglicht, und zudem eine effiziente, genaue und einfache Werkstückbearbeitung ermöglicht, insbesondere für das Ausführen von Fräsarbeiten an kleinen und großen Werkstücken aus Verbundwerkstoff, insbesondere kohlenstofffaserverstärktem Kunststoff bzw. CFK, an Freiformflächen.

Insbesondere kann somit ein Werkzeugmaschinenkonzept bereitgestellt werden, das bei dem Ausführen von Fräsarbeiten an Werkstücken aus Verbundwerkstoff, insbesondere kohlenstofffaserverstärktem Kunststoff bzw. CFK, flexiblere und gleichzeitig genaue Bearbeitungen bei hohen Stückzahlen ermöglicht. Es wird ein Maschinenkonzept bereitgestellt, das eine hohe Bearbeitungsbewegungsflexibilität bei hohen Freiheitsgraden hoher Steifigkeit und hoher Bearbeitungsgenauigkeit sowie -effizienz ermöglicht.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

**Fig. 1** zeigt eine beispielhafte Perspektivdarstellung einer Werkzeugmaschine gemäß einem Ausführungsbeispiel der Erfindung von schräg oben links vorne;
**Fig. 2** zeigt eine weitere beispielhafte Perspektivdarstellung der Werkzeugmaschine gemäß Fig. 1 von schräg oben rechts vorne;
**Fig. 3** zeigt eine weitere beispielhafte Perspektivdarstellung der Werkzeugmaschine gemäß Fig. 1 von schräg oben links vorne;
**Fig. 4** zeigt eine weitere beispielhafte Perspektivdarstellung der Werkzeugmaschine gemäß Fig. 1 von schräg oben links hinten;
**Fig. 5** zeigt eine weitere beispielhafte Perspektivdarstellung der Werkzeugmaschine gemäß Fig. 1 von schräg oben links vorne;
**Fig. 6** zeigt eine beispielhafte rechte Seitenansicht der Werkzeugmaschine gemäß Fig. 1;
**Fig. 7** zeigt eine beispielhafte linke Seitenansicht der Werkzeugmaschine gemäß Fig. 1;
**Fig. 8** zeigt eine beispielhafte Vorderansicht der Werkzeugmaschine gemäß Fig. 1;
**Fig. 9** zeigt eine beispielhafte Draufsicht der Werkzeugmaschine gemäß Fig. 1;
**Fig. 10** zeigt eine beispielhafte Rückansicht der Werkzeugmaschine gemäß Fig. 1;
**Fig. 11** zeigt eine beispielhafte Perspektivdarstellungen einer Spindelträgerbaugruppe einer Werkzeugmaschine gemäß einem Ausführungsbeispiel der Erfindung;
**Figs. 12 bis 14** zeigen weitere Perspektivdarstellungen einer Spindelträgerbaugruppe gemäß Fig. 11;
**Fig. 15** zeigt eine beispielhafte rechte Seitenansicht der Spindelträgerbaugruppe gemäß Fig. 11;
**Fig. 16** zeigt eine beispielhafte linke Seitenansicht der Spindelträgerbaugruppe gemäß Fig. 11;

### DETAILLIERTE BESCHREIBUNG DER FIGUREN UND BEVORZUGTER AUSFÜHRUNGSBEISPIELE

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

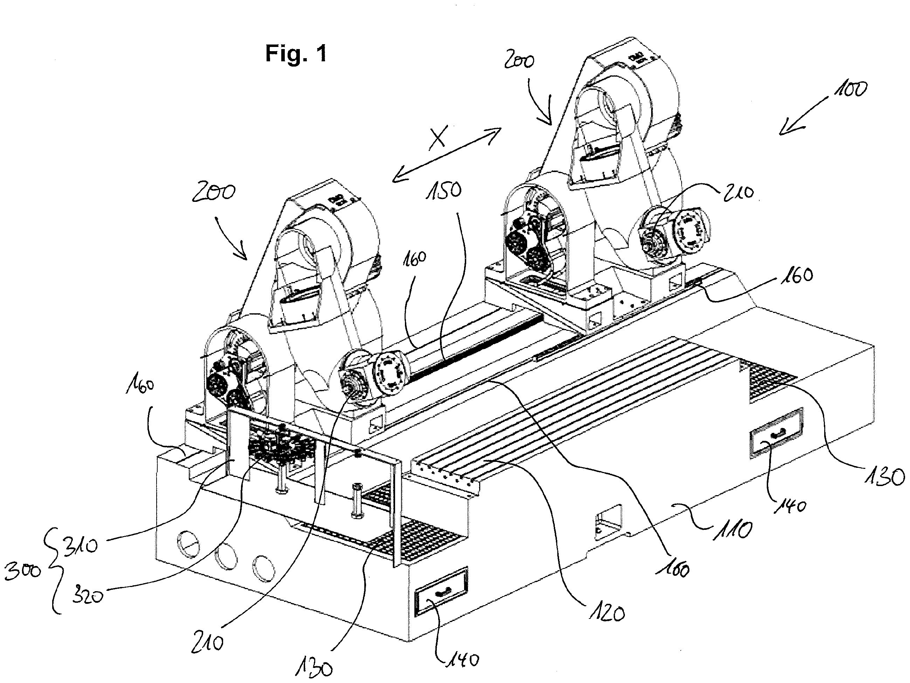

**Fig. 1** zeigt eine beispielhafte Perspektivdarstellung einer Werkzeugmaschine 100 gemäß einem Ausführungsbeispiel der Erfindung von schräg oben links vorne.

Die Werkzeugmaschine 100 weist ein Maschinenbett 110 (Maschinengestell) auf, das auf einer Oberfläche z.B. einer Werkshalle aufstellbar ist. Zusätzlich zu den dargestellten Komponenten kann die Werkzeugmaschine 100 zusätzlich weitere Bauteile aufweisen, wie z.B. ein Maschinengehäuse mit einer oder mehrerer zum Maschinen- bzw. Bearbeitungsraum öffenbaren Türen, ein oder mehrere Bedienpulte zum Bedienen der Werkzeugmaschine durch einen Bediener, eine Werkstück- bzw. Palettenwechselvorrichtung, ein angebautes größeres Werkzeugmagazin mit Wechsel- bzw. Handhabungsvorrichtung und andere Werkzeugmaschinenbauteile bzw. Zubehörteile.

Die Werkzeugmaschine 100 weist zudem einen Werkstückspannbereich 120 (Werkzeugspanntisch) auf, auf dem ein oder mehrere Werkstücke zur Bearbeitung an der Werkzeugmaschine eingespannt werden können. In diesem Ausführungsbeispiel ist beispielhaft ein einfacher als Werkzeugtisch ausgebildeter Werkstückspannbereich 120 bereitgestellt. In weiteren Ausführungsbeispielen ist es jedoch möglich, einen oder mehrere Dreh- bzw. Schwenktische bereitzustellen, auf denen das Werkstück eingespannt werden kann und um eine, zwei oder gar drei Rotationsachsen drehbar bzw. verschwenkbar gesteuert werden kann. Weiterhin ist es möglich, einen oder mehrere Werkzeugtisch (ohne oder mit einem oder mehreren Dreh- bzw. Schwenktischen) auf einem oder mehreren Linearachsschlitten anzuordnen, die auf dem Maschinenbett linear verfahrbar angeordnet sein können.

In diesem Ausführungsbeispiel ist der Werkstückspannbereich 120 als einfacher Werkzeugtisch ausgebildet, der auf einer oberen Seite des Maschinengestells 110 angeordnet ist. Um den Werkzeugspannbereich 120 herum weist das Maschinengestell 110 Hohlräume auf, die oberseitig beispielhaft mit Gitterabschnitten 130 abgedeckt sind. Bei der zerspanenden Bearbeitung des auf dem Werkstückspannbereich 120 eingespannten Werkstücks anfallende Späne können somit durch die Gitterabschnitte 130 in jeweilige Spänebehälter 140 in den Hohlräumen des Maschinengestells 110 hineinfallen und gesammelt werden. Die Spänebehälter 140 können zur Entsorgung der Späne schubladenartig entnommen werden. In weiteren Ausführungsbeispielen ist es möglich, automatische Spänefördereinrichtungen in die Hohlräume des Maschinengestells unter den Gitterabschnitten 130 einzubringen.

Auf einer hinteren Seite des Maschinengestells 110 der Werkzeugmaschine 100 sind beispielhaft zwei Spindelträgerbaugruppen 200 mit einer jeweiligen werkzeugtragenden Arbeitsspindel 210 angeordnet. Die Arbeitsspindeln 210 sind jeweils dazu eingerichtet, ein jeweiliges Werkzeug, insbesondere Fräswerkzeug, aufzunehmen und um die jeweilige Spindelachse rotatorisch zur Erzeugung einer Schneidbewegung anzutreiben.

Zudem ist jede der Spindelträgerbaugruppen 200 beispielhaft auf Linearführungen 160 linear verfahrbar auf dem Maschinengestell 110 angeordnet. Die Spindelträgerbaugruppen 200 können beispielhaft jeweils unabhängig voneinander auf dem Maschinengestell 110 entlang der Linearführungen 160 in einer Richtung der X-Achse (X-Richtung) parallel zu dem Werkstückspannbereich 120 verfahren werden, insbesondere um eine lineare Relativbewegung der an den Arbeitsspindeln 210 aufgenommenen Werkzeuge relativ zu einem bzw. mehreren auf dem Werkstückspannbereich 120 eingespannten Werkstücken zu ermöglichen.

Parallel zu den Linearführungen 160 ist hierzu auf dem Maschinengestell 110 weiterhin beispielhaft eine Gewindewelle 150 in X-Richtung angeordnet, in die jeweilige Gegenmutterelemente (nicht dargestellt) an den Unterseiten der Spindelträgerbaugruppen 200 eingreifen, und durch deren unabhängiges rotatorisches Antreiben die Spindelträgerbaugruppen 200 jeweils unabhängig voneinander entlang der Gewindewelle 150 auf den Linearführungen 160 gelagert verfahren werden.

Auf einer Seite des Maschinengestells 110 ist weiterhin beispielhaft ein Werkzeugmagazinrad 320 eines Werkzeugmagazins 300 bereitgestellt, das mittels eines Magazinrahmens 310 an dem Maschinengestell 110 befestigbar ist. Das Werkzeugmagazinrad 320 ist beispielhaft horizontal ausgerichtet und um eine vertikale Rotationsachse drehbar gehalten. Umfänglich des Werkzeugmagazinrads 320 weist das Werkzeugmagazinrad 320 eine Mehrzahl von Werkzeugaufnahmeabschnitten auf, an denen Werkzeuge gehalten bzw. aufgenommen werden können.

Für einen Werkzeugwechsel ist die linke Spindelträgerbaugruppe 200 in Fig. 1 dazu eingerichtet, auf den Linearführungen 160 nach links zu dem Werkzeugmagazinrad 320 zu verfahren und ein in der Arbeitsspindel 210 aufgenommenes Werkzeug in einer Werkzeugaufnahme des Werkzeugmagazinrads 320 abzulegen bzw. ein einzuwechselndes Werkzeug aus einer Werkzeugaufnahme des Werkzeugmagazinrads 320 herauszunehmen und in der Arbeitsspindel 210 aufzunehmen, um mit dem eingewechselten Werkzeug die Bearbeitung des Werkstücks weiterzuführen. Das Werkzeugmagazinrad 320 ist bei, vor und nach dem Werkzeugwechsel dazu eingerichtet, durch Rotation die der Spindelträgerbaugruppe 200 zugewandte(n) Werkzeugaufnahme(n) durch zu rotieren.

Hierbei ist in Fig. 1 beispielhaft nur ein kleines Werkzeugmagazin 300 mit einem kleinen Werkzeugmagazinrad 320 an einer Seite des Maschinengestells 100 gezeigt. Zudem kann ein Werkzeugmagazin 300 auch an der anderen Seite des Maschinengestells 100 für die andere Spindelträgerbaugruppe 200 bereitgestellt werden. Weiterhin können auf beiden Seiten auch Werkzeugmagazine mit mehreren Werkzeugmagazinrädern 320 nebeneinander und/oder auch beabstandet übereinander bereitgestellt werden.

Weiterhin können größere Zulieferwerkzeugmagazine bereitgestellt werden, die vorgehaltene Werkzeuge an den einen oder mehreren Werkzeugmagazinrädern 320 aus einem größeren Werkzeugspeicher beliefernd ein- und auswechseln.

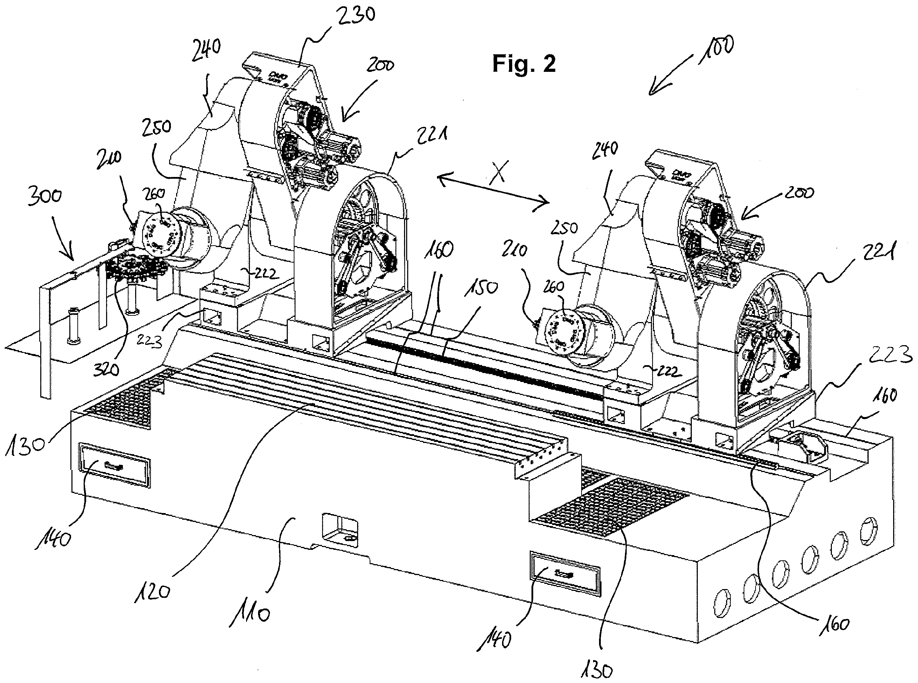

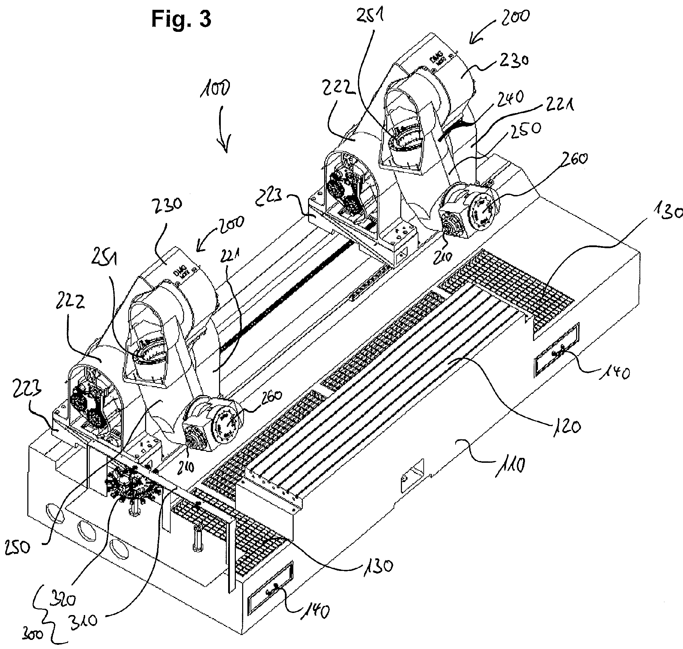

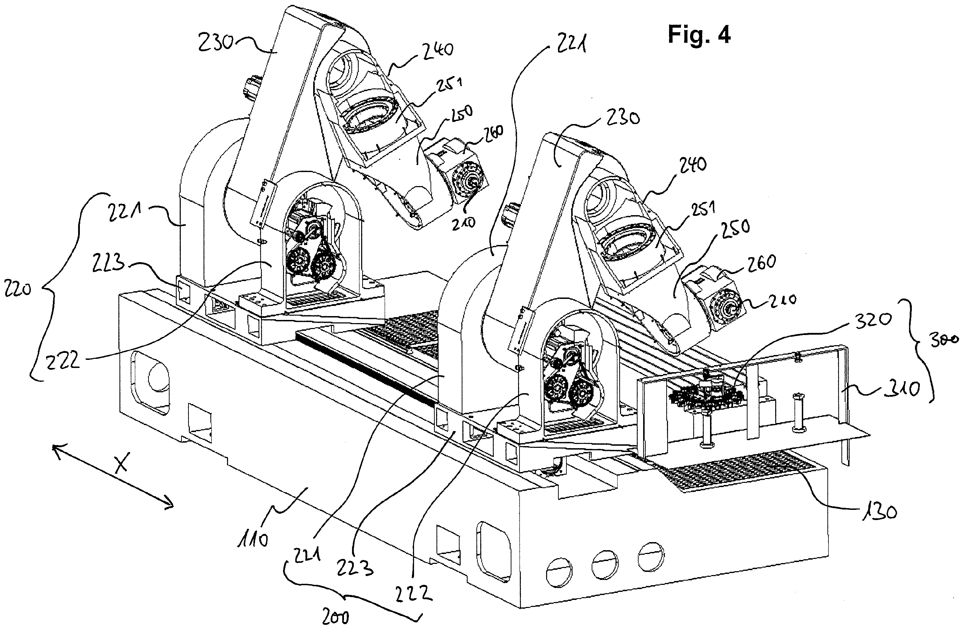

**Figs. 2 bis 5** zeigen weitere beispielhafte Perspektivdarstellungen der Werkzeugmaschine 100 gemäß Fig. 1. Insbesondere zeigen die Figs. 2 bis 5 weitere Darstellungen der auf dem Maschinengestell 110 angeordneten Spindelträgerbaugruppen 200.

Die Spindelträgerbaugruppen 200 sind beispielhaft baugleich ausgeführt, und es wird beispielhaft nur eine der Spindelträgerbaugruppen 200 beschrieben.

Die Spindelträgerbaugruppen können in weiteren Ausführungsbeispielen jedoch auch mit unterschiedlichen Bauweisen bereitgestellt werden. In weiteren Ausführungsbeispielen können auch nur eine oder mehr als zwei Spindelträgerbaugruppen bereitgestellt werden.

Die Spindelträgerbaugruppe 200 weist einen Schwenkarmaufnahmeabschnitt 220 auf, der zwei Schwenkarmhaltekörper 221 und 222 aufweist, die beide auf einem Linearachsschlitten 223 angeordnet sind.

Der Linearachsschlitten 223 ist auf den Linearführungen 160 in X-Richtung linear verfahrbar gelagert. Die Schwenkarmhaltekörper 221 und 222 sind in X-Richtung nebeneinander auf dem Linearachsschlitten 223 angeordnet.

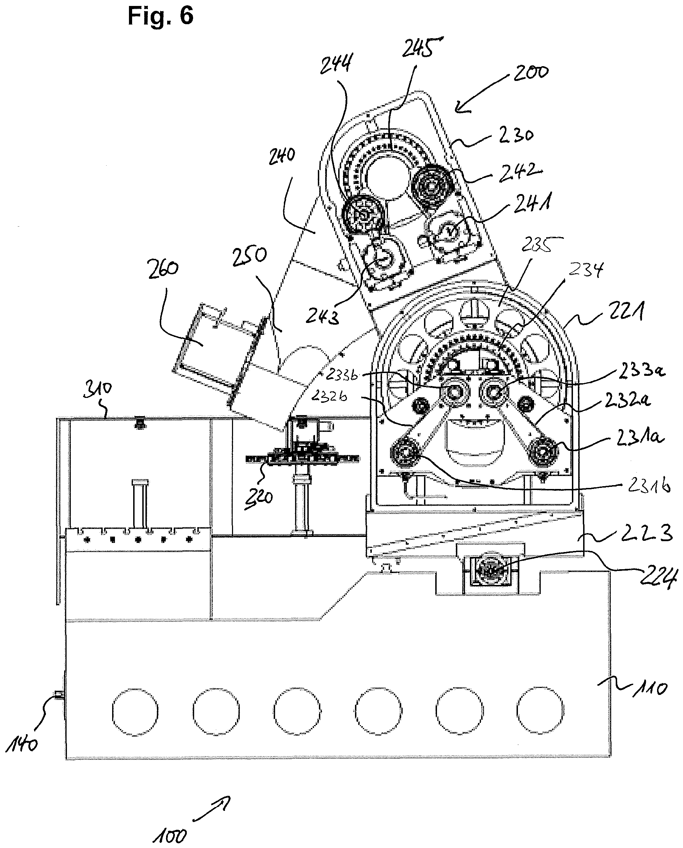

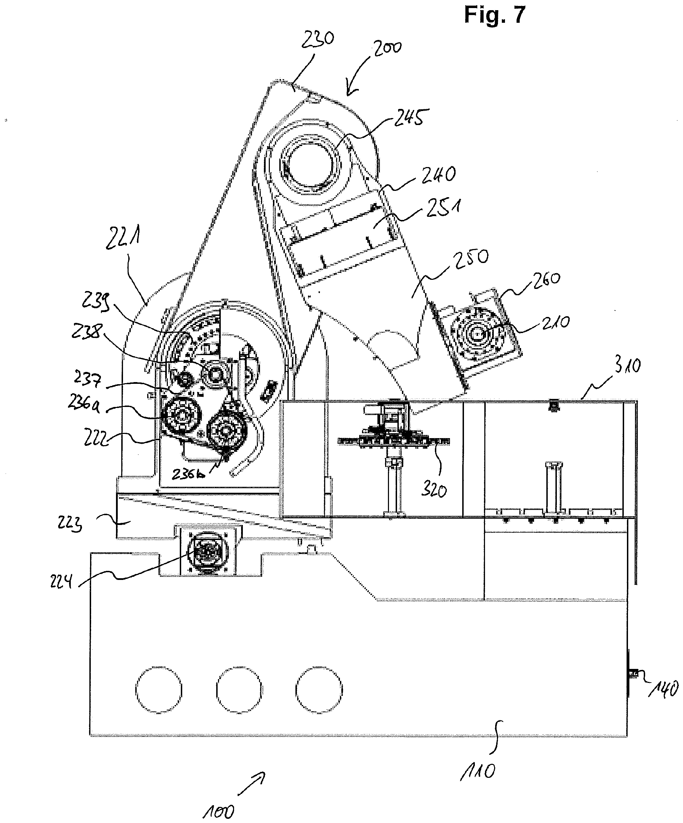

Zwischen den Schwenkarmhaltekörpern 221 und 222 wird ein Ende eines ersten Schwenkarms 230 schwenkbar gehalten. Antriebe werden später in Zusammenhang mit Figs. 6 und 7 beschrieben.

Das andere Ende des ersten Schwenkarms 230 hält einen weiteren zweiten Schwenkarm 240, und der zweite Schwenkarm 240 ist schwenkbar an dem ersten Schwenkarm 230 gelagert. Antriebe werden später in Zusammenhang mit Figs. 6 und 7 beschrieben.

Das andere Ende des zweiten Schwenkarms 240 hält einen Spindelträgerarm 250, der an dem zweiten Schwenkarm 240 drehbar gelagert ist. Der zweite Schwenkarm 240 trägt hierbei einen Antrieb 251 zum Antreiben der Drehbewegung des Spindelträgerarms 250. Der Antrieb 251 ist beispielhaft als gekühlter Torqueantrieb ausgebildet.

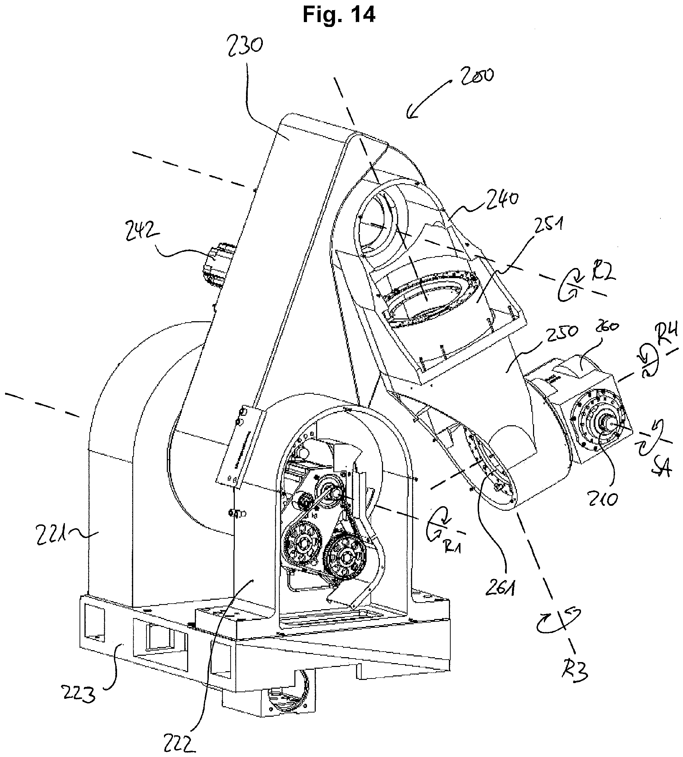

Das andere Ende des Spindelträgerarms 250 hält einen Fräskopf 260, der an dem Spindelträgerarm 250 drehbar gelagert ist. Der Spindelträgerarm 250 trägt hierbei einen Antrieb 261 zum Antreiben der Drehbewegung des Fräskopfes 260 (siehe Fig. 14). Der Antrieb 261 ist beispielhaft als gekühlter Torqueantrieb ausgebildet.

Der Fräskopf 260 umfasst die bereits beschriebene Arbeitsspindel 210 sowie einen nicht dargestellten Spindelantrieb zum Antreiben der Arbeitsspindel für das rotatorische Antreiben des aufgenommenen Werkzeugs zum Erzeugen der Schnittbewegung.

**Figs. 6** **und** **7** zeigen Seitenansichten der Werkzeugmaschine 100 gemäß Fig. 1. Insbesondere zeigen die Figs. 6 und 7 weitere Darstellungen der auf dem Maschinengestell 110 angeordneten Spindelträgerbaugruppen 200.

Zwischen den Schwenkarmhaltekörpern 221 und 222 wird ein Ende des ersten Schwenkarms 230 schwenkbar gehalten. In diesem Ausführungsbeispiel sind in jedem der beiden Schwenkarmhaltekörpern 221 und 222 Antriebe und Getriebe zum Antreiben der Schwenkbewegung des ersten Schwenkarms 230 bereitgestellt.

Wie in Fig. 6 beispielhaft dargestellt ist, weist der Schwenkarmhaltekörper 221 beispielhaft zwei Antriebe 233a und 233b auf, die beispielhaft jeweils über Antriebsriemen 232a und 232b jeweilige Antriebsritzel 231a und 231b (antreibende Antriebselemente) eines Getriebes zum Übertragen eines Drehmoments auf den ersten Schwenkarm 230 antreiben. Die Antriebsritzel 231a und 231b sind mit einem angetriebenen Zahnrad 235 (beispielhaft als Stirnrad ausgebildet) als beispielhaftes angetriebenes Antriebselement verspannt in Eingriff gebracht. Das angetriebene Zahnrad 235 ist beispielhaft über einen Lagerring 234 drehfest mit dem ersten Schwenkarm 230 befestigt, welcher drehbar an dem Schwenkarmhaltekörper 221 gelagert ist.

Der verspannte Eingriff der beiden Antriebsritzel 231a und 231b an dem angetriebenen Zahnrad 235 bewirkt den Vorteil, dass bei einem Übergang von Antreiben gegen und dann im Uhrzeigersinn bzw. umgekehrt kein Spiel in den Zahnzwischenräumen zum Tragen kommt und ein spielfreier und präziser Übergang beim Steuern erst gegen und dann im Uhrzeigersinn bzw. umgekehrt ermöglicht ist. Dies ermöglicht eine hervorragende Präzision der Steuerung der Schwenkbewegung des ersten Schwenkarms 230.

Wie in Fig. 7 beispielhaft dargestellt ist, weist der Schwenkarmhaltekörper 222 beispielhaft einen Antrieb 238 auf, der beispielhaft über den Antriebsriemen 237 zwei Antriebsritzel 236a und 236b (antreibende Antriebselemente) eines Getriebes zum Übertragen eines Drehmoments auf den ersten Schwenkarm 230 antreibt. Die Antriebsritzel 236a und 236b sind mit einem angetriebenen Zahnrad 239 (beispielhaft als Stirnrad ausgebildet) als beispielhaftes angetriebenes Antriebselement verspannt in Eingriff gebracht. Das angetriebene Zahnrad 239 ist beispielhaft drehfest mit dem ersten Schwenkarm 230 befestigt, welcher drehbar an dem Schwenkarmhaltekörper 222 gelagert ist.

Der verspannte Eingriff der beiden Antriebsritzel 236a und 236b an dem angetriebenen Zahnrad 239 bewirkt den Vorteil, dass bei einem Übergang von Antreiben gegen und dann im Uhrzeigersinn bzw. umgekehrt kein Spiel in den Zahnzwischenräumen zum Tragen kommt und ein spielfreier und präziser Übergang beim Steuern erst gegen und dann im Uhrzeigersinn bzw. umgekehrt ermöglicht ist. Dies ermöglicht eine hervorragende Präzision der Steuerung der Schwenkbewegung des ersten Schwenkarms 230.

Das andere Ende des ersten Schwenkarms 230 hält den weiteren zweiten Schwenkarm 240, und der zweite Schwenkarm 240 ist schwenkbar an dem ersten Schwenkarm 230 gelagert.

Wie in Fig. 6 beispielhaft dargestellt ist, weist der erste Schwenkarm 230 beispielhaft zwei Antriebe 241 und 243 auf, die beispielhaft jeweils über Antriebsriemen jeweilige Antriebsritzel 242 und 244 (antreibende Antriebselemente) eines Getriebes zum Übertragen eines Drehmoments auf den zweiten Schwenkarm 240 antreiben. Die Antriebsritzel 242 und 244 sind mit einem angetriebenen Zahnrad 245 (beispielhaft als Hohlrad ausgebildet) als beispielhaftes angetriebenes Antriebselement verspannt in Eingriff gebracht. Das angetriebene Zahnrad 245 ist beispielhaft drehfest mit dem zweiten Schwenkarm 240 befestigt, welcher drehbar an dem ersten Schwenkarm 230 gelagert ist.

Der verspannte Eingriff der beiden Antriebsritzel 242 und 244 an dem angetriebenen Zahnrad 245 bewirkt den Vorteil, dass bei einem Übergang von Antreiben gegen und dann im Uhrzeigersinn bzw. umgekehrt kein Spiel in den Zahnzwischenräumen zum Tragen kommt und ein spielfreier und präziser Übergang beim Steuern erst gegen und dann im Uhrzeigersinn bzw. umgekehrt ermöglicht ist. Dies ermöglicht eine hervorragende Präzision der Steuerung der Schwenkbewegung des zweiten Schwenkarms 240.

Das andere Ende des zweiten Schwenkarms 240 hält den Spindelträgerarm 250, der an dem zweiten Schwenkarm 240 drehbar gelagert ist. Der zweite Schwenkarm 240 trägt hierbei den Antrieb 251 zum Antreiben der Drehbewegung des Spindelträgerarms 250 (siehe z.B. Fig. 7). Der Antrieb 251 ist beispielhaft als gekühlter Torqueantrieb ausgebildet.

Das andere Ende des Spindelträgerarms 250 hält den Fräskopf 260, der an dem Spindelträgerarm 250 drehbar gelagert ist. Der Spindelträgerarm 250 trägt hierbei den Antrieb 261 zum Antreiben der Drehbewegung des Fräskopfes 260 (siehe z.B. Fig. 14). Der Antrieb 261 ist beispielhaft als gekühlter Torqueantrieb ausgebildet.

Der Fräskopf 260 umfasst die bereits beschriebene Arbeitsspindel 210 sowie einen nicht dargestellten Spindelantrieb zum Antreiben der Arbeitsspindel für das rotatorische Antreiben des aufgenommenen Werkzeugs zum Erzeugen der Schnittbewegung.

An den Unterseiten der Spindelträgerschlitten 223 zeigen die Figs. 6 und 7 weiterhin beispielhaft Antriebe 224, die die mit angetriebenen Gewindemutterelementen (nicht dargestellt) an der Gewindewelle 150 eingreifen und die lineare Verfahrbewegung der Spindelträgerschlitten 223 in X-Richtung anzeigen können.

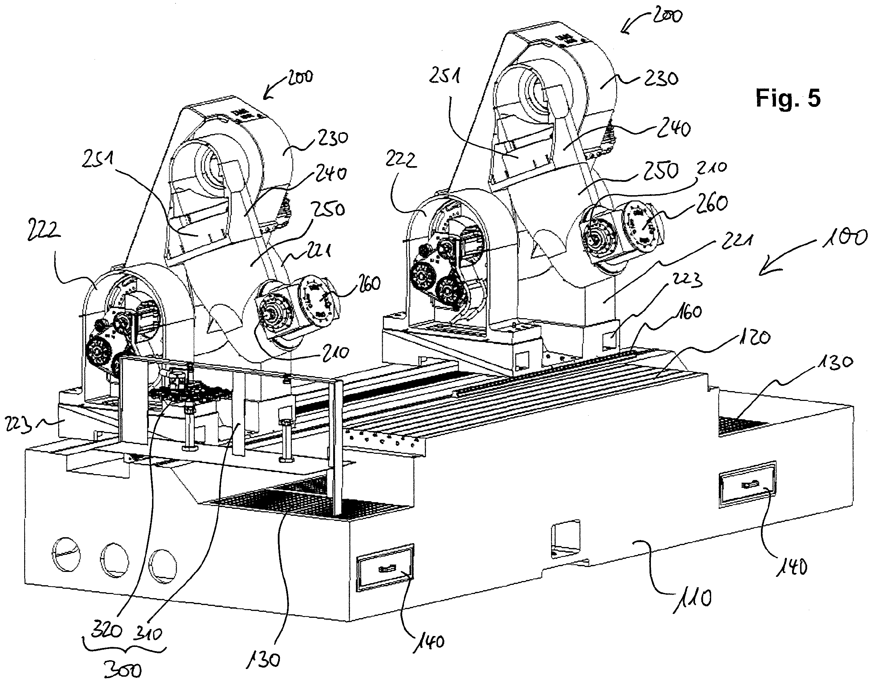

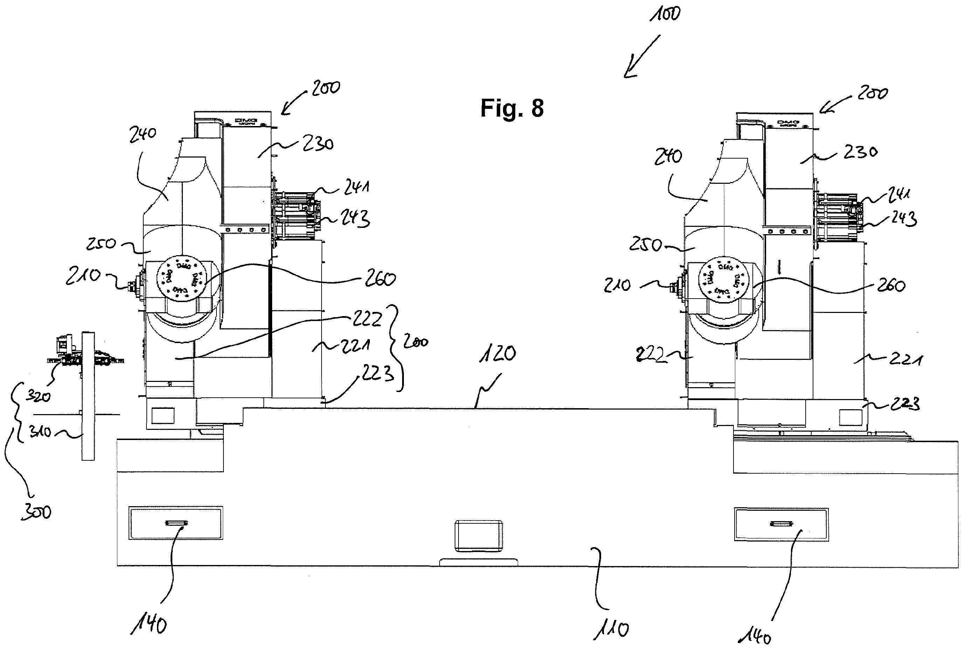

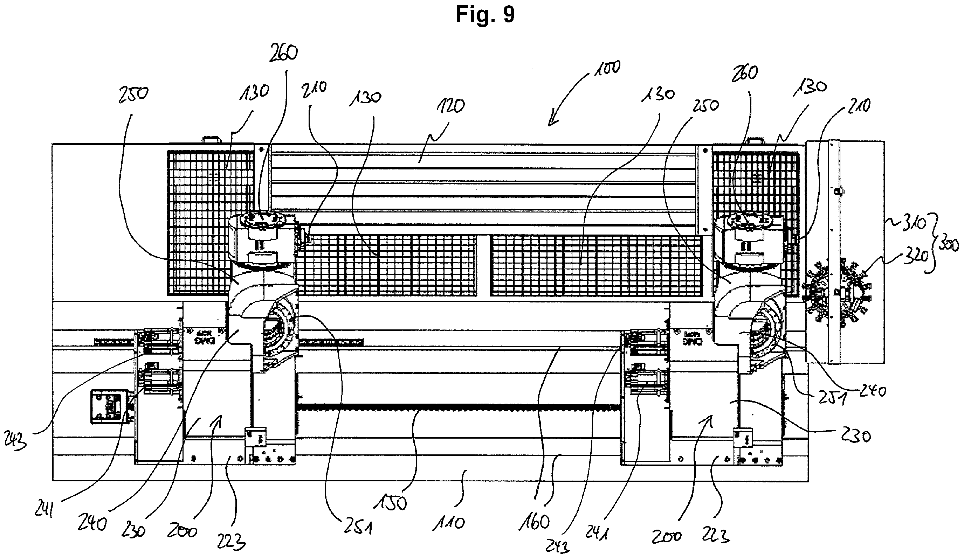

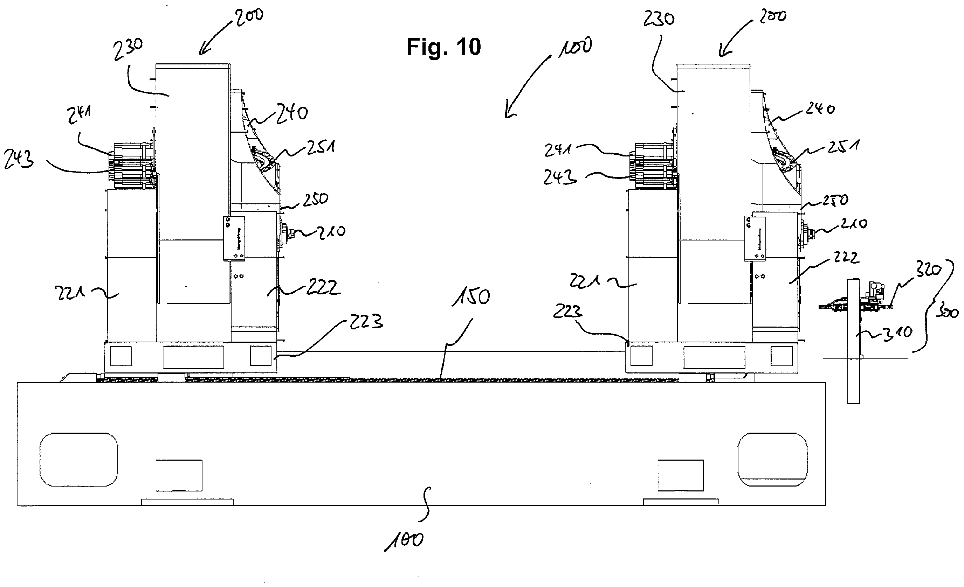

**Fig. 5** zeigt eine weitere beispielhafte Perspektivdarstellung der Werkzeugmaschine gemäß Fig. 1 von schräg oben links vorne, **Fig. 6** zeigt eine beispielhafte rechte Seitenansicht der Werkzeugmaschine gemäß Fig. 1, **Fig. 7** zeigt eine beispielhafte linke Seitenansicht der Werkzeugmaschine gemäß Fig. 1, **Fig. 8** zeigt eine beispielhafte Vorderansicht der Werkzeugmaschine gemäß Fig. 1, **Fig. 9** zeigt eine beispielhafte Draufsicht der Werkzeugmaschine gemäß Fig. 1 und **Fig. 10** zeigt eine beispielhafte Rückansicht der Werkzeugmaschine gemäß Fig. 1.

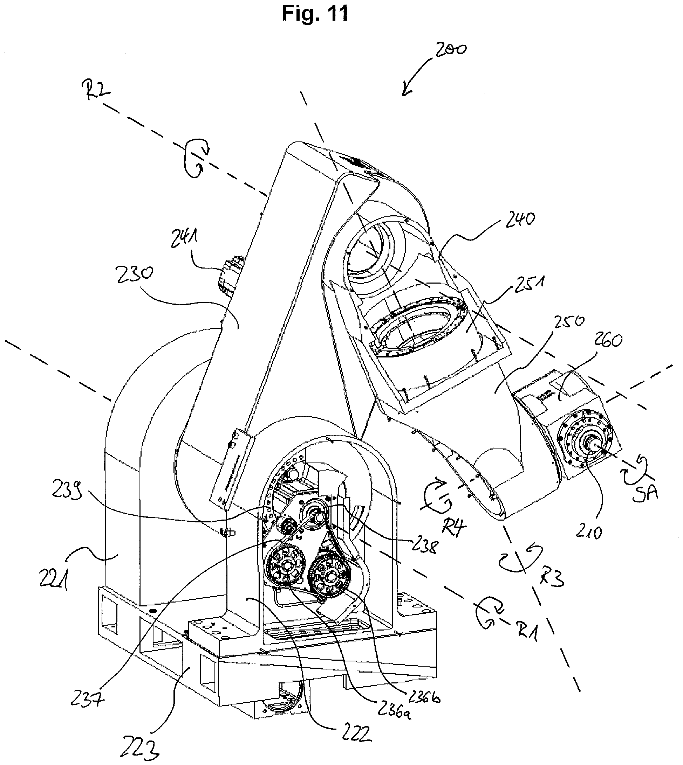

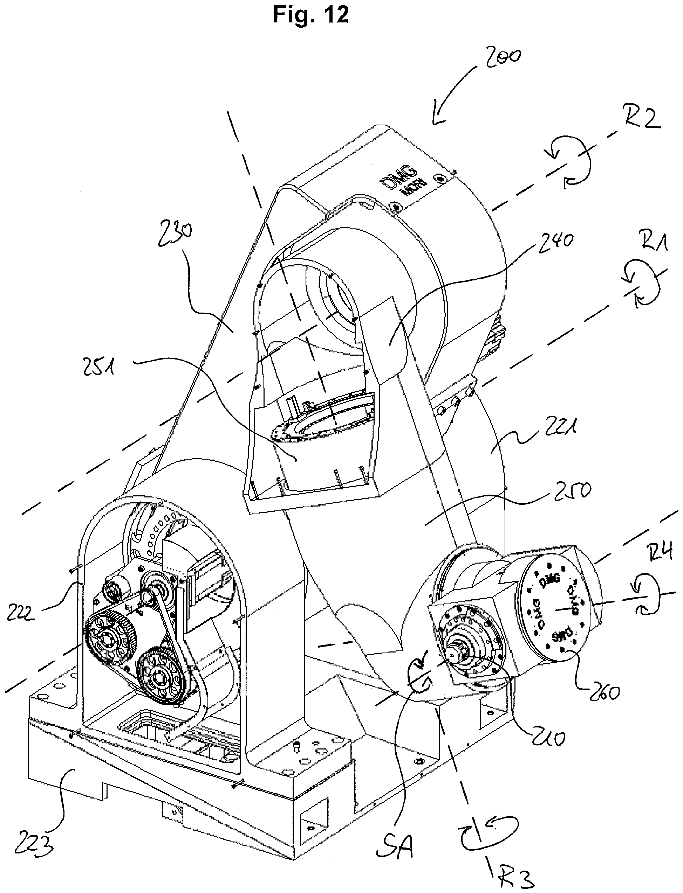

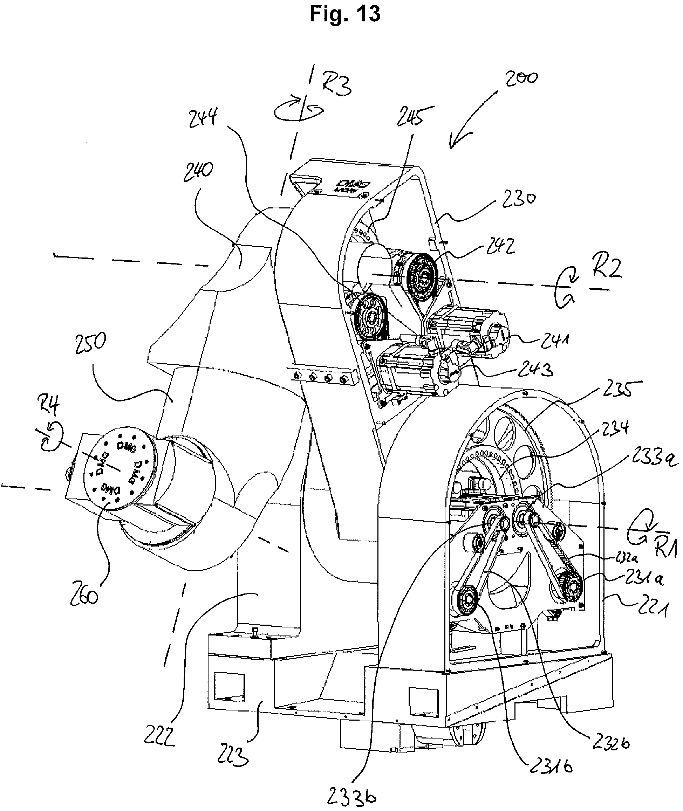

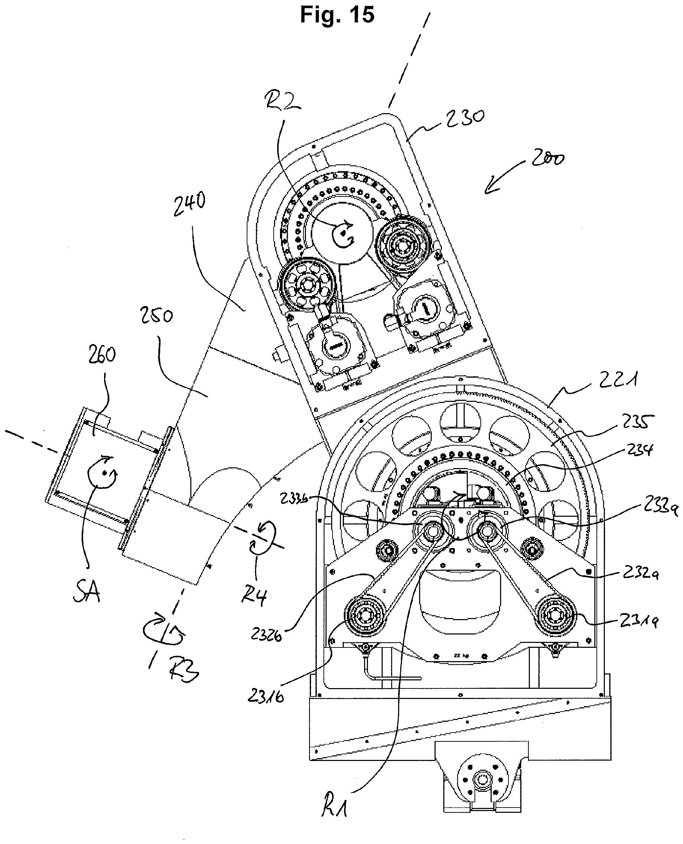

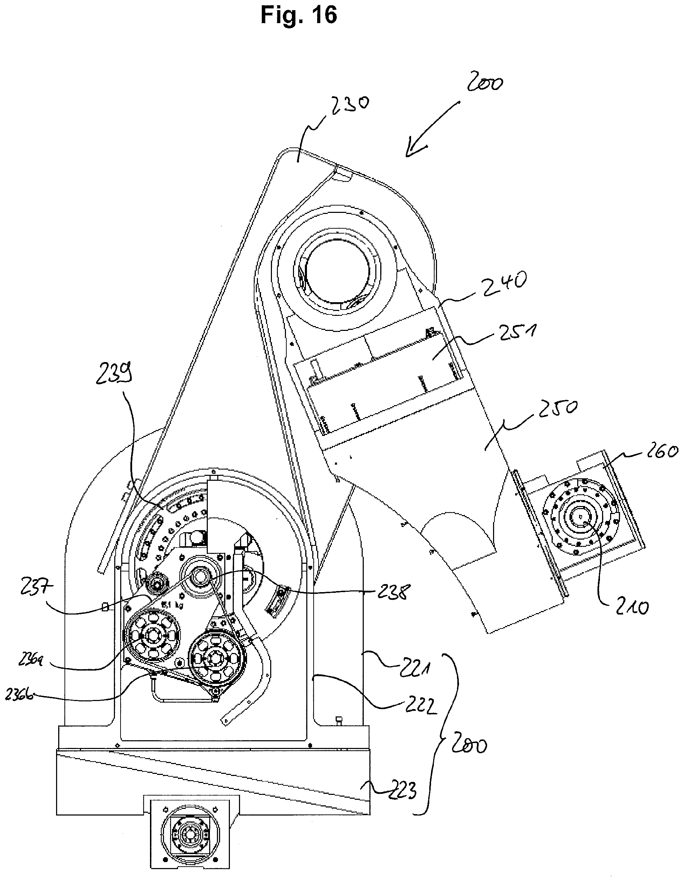

**Fig. 11** zeigt eine beispielhafte Perspektivdarstellungen einer Spindelträgerbaugruppe der Werkzeugmaschine aus Figs. 1 bis 10 gemäß einem Ausführungsbeispiel der Erfindung. Diese jedoch kann in beliebiger Anzahl auch an anderen Werkzeugmaschinen, Maschinengestellen, Maschinenbetten und Maschinenständern genutzt werden. **Figs. 12 bis 14** zeigen weitere Perspektivdarstellungen einer Spindelträgerbaugruppe gemäß Fig. 11, **Fig. 15** zeigt eine beispielhafte rechte Seitenansicht der Spindelträgerbaugruppe gemäß Fig. 11 und **Fig. 16** zeigt eine beispielhafte linke Seitenansicht der Spindelträgerbaugruppe gemäß Fig. 11.

Die Spindelträgerbaugruppe 200 weist einen Schwenkarmaufnahmeabschnitt 220 auf, der zwei Schwenkarmhaltekörper 221 und 222 aufweist, die beide auf einem Linearachsschlitten 223 angeordnet sind.

Der Linearachsschlitten 223 ist auf den Linearführungen 160 eines Maschinengestells 110 der Werkzeugmaschine 100 linear verfahrbar anordenbar. Die Schwenkarmhaltekörper 221 und 222 sind in der Verfahrrichtung (z.B. X-Richtung) nebeneinander auf dem Linearachsschlitten 223 angeordnet.

Zwischen den Schwenkarmhaltekörpern 221 und 222 wird ein Ende eines ersten Schwenkarms 230 schwenkbar gehalten. Der erste Schwenkarm 230 ist beispielhaft um eine erste Rotationsachse R1 schwenkbar gelagert, die beispielhaft parallel zu der Verfahrrichtung (z.B. X-Richtung) des Linearachsschlittens 223 ausgerichtet ist.

Das andere Ende des ersten Schwenkarms 230 hält einen weiteren zweiten Schwenkarm 240, und der zweite Schwenkarm 240 ist schwenkbar um eine zweite Rotationsachse R2 an dem ersten Schwenkarm 230 gelagert. Die ersten und zweiten Rotationsachsen R1 und R2 sind beispielhaft parallel zueinander ausgerichtet.

Das andere Ende des zweiten Schwenkarms 240 hält einen Spindelträgerarm 250, der an dem zweiten Schwenkarm 240 um eine dritte Rotationsachse R3 drehbar gelagert ist. Die dritte Rotationsachse R3 ist beispielhaft senkrecht zu der zweiten Rotationsachse R2 ausgerichtet.

Das andere Ende des Spindelträgerarms 250 hält einen Fräskopf 260, der an dem Spindelträgerarm 250 um eine vierte Rotationsachse R4 drehbar gelagert ist. Die vierte Rotationsachse R4 ist beispielhaft senkrecht zu der dritten Rotationsachse R3 ausgerichtet.

Der Fräskopf 260 umfasst die bereits beschriebene Arbeitsspindel 210 sowie einen nicht dargestellten Spindelantrieb zum Antreiben der Arbeitsspindel für das rotatorische Antreiben des aufgenommenen Werkzeugs um die Spindelachse SA zum Erzeugen der Schnittbewegung. Die Spindelachse SA ist beispielhaft senkrecht zu der vierten Rotationsachse R4 ausgerichtet.

Durch Verschwenken der ersten und zweiten Schwenkarme 230 und 240 kann der Fräskopf präzise in einer Ebene frei verfahren bzw. bewegt werden, die senkrecht zu der Verfahrrichtung (z.B. X-Richtung) des Linearachsschlittens 223 ausgerichtet ist.

Dies ermöglicht somit eine freiere Bewegung mit weniger Bauteilen, die zwei Linearachsen senkrecht zur Verfahrrichtung (z.B. X-Richtung) des Linearachsschlittens 223 ersetzt und dabei eine größere Bewegungsfreiheit bei gleichen Freiheitsgraden im Arbeitsraum ermöglicht.

Zudem ermöglichen die Drehbewegungen um die Rotationsachsen R3 und R4 eine freie Ausrichtung der Spindelachse in allen drei Raumrichtungen zur Bearbeitung eines Werkstücks aus jeder beliebigen Richtung.

Dies ermöglicht somit eine freiere Bewegung mit weniger Bauteilen und freierem Bearbeitungsraum mit einer größeren Bewegungsfreiheit im Arbeitsraum bei gleichen Freiheitsgraden einer Fünf-Achs-Fräsmaschine herkömmlicher Bauweise. Gleichzeitig können hochsteife Baugruppen mit hochpräzisen Antrieben und Schwenk- bzw. Rundachsen bereitgestellt werden, so dass gleiche bzw. sogar höhere Bearbeitungsgenauigkeiten erreicht werden können, wie bei Fünf-Achs-Fräsmaschinen herkömmlicher Bauweise (Fahrständerfräsmaschine).

Vorstehend wurden Beispiele bzw. Ausführungsbeispiele der vorliegenden Erfindung sowie deren Vorteile detailliert unter Bezugnahme auf die beigefügten Figuren beschrieben. Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

Zusammenfassend ermöglicht es die vorliegende Erfindung, ein Werkzeugmaschinenkonzept zu schaffen bzw. bereitzustellen, die eine Maschinenkinematik mit hoher Steifigkeit der Bauteile aufweist und gleichzeitig eine hohe Bewegungsflexibilität mit hohen Freiheitsgraden sowie eine hohe Bearbeitungsgenauigkeit bzw. Steuerungspräzision ermöglicht, und zudem eine effiziente, genaue und einfache Werkstückbearbeitung ermöglicht, insbesondere für das Ausführen von Fräsarbeiten an kleinen und großen Werkstücken aus Verbundwerkstoff, insbesondere kohlenstofffaserverstärktem Kunststoff bzw. CFK, an Freiformflächen.

Insbesondere kann somit ein Werkzeugmaschinenkonzept bereitgestellt werden, die bei dem Ausführen von Fräsarbeiten an Werkstücken aus Verbundwerkstoff, insbesondere kohlenstofffaserverstärktem Kunststoff bzw. CFK, flexiblere und gleichzeitig genaue Bearbeitungen bei hohen Stückzahlen ermöglicht. Es wird ein Maschinenkonzept bereitgestellt, das eine hohe Bearbeitungsbewegungsflexibilität bei hohen Freiheitsgraden hoher Steifigkeit und hoher Bearbeitungsgenauigkeit sowie -effizienz ermöglicht.

## Patentansprüche

1. Spindelträgerbaugruppe zum Einsatz an einer Werkzeugmaschine, mit
- einem auf einem Maschinenbett der Werkzeugmaschine anordenbaren bzw. anbringbaren Schwenkarmaufnahmeabschnitt (220),
- einem an dem Schwenkarmaufnahmeabschnitt um eine erste Rotationsachse (R1) schwenkbar gelagerten ersten Schwenkarm (230),
- einem an dem ersten Schwenkarm um eine zweite Rotationsachse (R2) schwenkbar gelagerten zweiten Schwenkarm (240),
- einem an dem zweiten Schwenkarm um eine dritte Rotationsachse (R3) drehbar gelagerten Spindelträgerarm (250),
- einem an dem Spindelträgerarm um eine vierte Rotationsachse (R4) drehbar gelagerten Fräskopf (260), und
- einer an dem Fräskopf gehaltenen Arbeitsspindel (210) zur Aufnahme eines Werkzeugs,
wobei die dritte Rotationsachse (R3) senkrecht oder quer zur vierten Rotationsachse (R4) ausgerichtet ist, und wobei
der Schwenkarmaufnahmeabschnitt (220) auf einem Achsschlitten (223) angeordnet ist, der auf dem Maschinenbett (110) in einer zur ersten Rotationsachse (R1) parallel ausgerichteten Richtung (X) linear verfahrbar ist, und wobei
der Schwenkarmaufnahmeabschnitt (220) zwei Schwenkarmhaltekörper (221, 222) zur schwenkbar gelagerten Halterung des ersten Schwenkarms (230) aufweist, die in der Verfahrrichtung (X) des Achsschlitten (223) nebeneinander auf dem Achsschlitten (223) angeordnet sind.

2. Spindelträgerbaugruppe gemäß Anspruch 1, **dadurch gekennzeichnet, dass**
die zweite Rotationsachse (R2) parallel zur ersten Rotationsachse (R1) ausgerichtet ist.

3. Spindelträgerbaugruppe gemäß Anspruch 1 oder 2, **dadurch gekennzeichnet, dass**
die dritte Rotationsachse (R3) senkrecht oder quer zur zweiten Rotationsachse (R2) ausgerichtet ist.

4. Spindelträgerbaugruppe gemäß einem der vorstehenden Ansprüche, **dadurch gekennzeichnet, dass**
eine Spindelachse (SA) der Arbeitsspindel (210) senkrecht oder quer zur vierten Rotationsachse (R4) ausgerichtet ist.

5. Spindelträgerbaugruppe gemäß einem der vorstehenden Ansprüche, **dadurch gekennzeichnet, dass**
ein Werkzeugspannabschnitt (120) relativ zu dem Schwenkarmaufnahmeabschnitt (220) auf dem Maschinenbett (110) in zumindest einer Linearachsrichtung (X) linear verfahrbar ist.

6. Spindelträgerbaugruppe gemäß einem der vorstehenden Ansprüche, **dadurch gekennzeichnet, dass**
einer (222) der Schwenkarmhaltekörper kleiner ausgebildet ist, als der andere Schwenkarmhaltekörper (221) der beiden Schwenkarmhaltekörper, wobei der zweite Schwenkarm (240) an der dem kleineren Schwenkarmhaltekörper (222) zugewandten Seite des ersten Schwenkarms (230) gehalten ist;
jeder der beiden Schwenkarmhaltekörper des Schwenkarmaufnahmeabschnitts (220) zumindest einen Antrieb zum Antreiben einer Schwenkbewegung des ersten Schwenkarms aufweist; und/oder
jeder der beiden Schwenkarmhaltekörper des Schwenkarmaufnahmeabschnitts (220) zumindest ein verspanntes Getriebe zum Übertragen eines Drehmoments beim Antreiben einer Schwenkbewegung des ersten Schwenkarms aufweist; und wobei
jedes der verspannten Getriebe zumindest ein angetriebenes Antriebselement und zumindest zwei antreibende Antriebselemente aufweist, die gleichzeitig mit dem angetriebenen Antriebselement zusammenwirken.

7. Spindelträgerbaugruppe gemäß einem der vorstehenden Ansprüche, **dadurch gekennzeichnet, dass**
der erste Schwenkarm (230) zumindest einen Antrieb zum Antreiben einer Schwenkbewegung des zweiten Schwenkarms (240) aufweist; und/oder
der erste Schwenkarm (230) zumindest ein verspanntes Getriebe zum Übertragen eines Drehmoments beim Antreiben einer Schwenkbewegung des zweiten Schwenkarms (240) aufweist; und wobei
jedes der verspannten Getriebe zumindest ein angetriebenes Antriebselement und zumindest zwei antreibende Antriebselemente aufweist, die gleichzeitig mit dem angetriebenen Antriebselement zusammenwirken.

8. Spindelträgerbaugruppe gemäß einem der vorstehenden Ansprüche, **dadurch gekennzeichnet, dass**
der zweite Schwenkarm (240) zumindest einen Antrieb zum Antreiben einer Rotationsbewegung des Spindelträgerarms (250) aufweist; und wobei
der Antrieb zum Antreiben der Rotationsbewegung des Spindelträgerarms (250) als Torqueantrieb (251), insbesondere gekühlter Torqueantrieb, ausgebildet ist.

9. Spindelträgerbaugruppe gemäß einem der vorstehenden Ansprüche, **dadurch gekennzeichnet, dass**
der Spindelträgerarm (250) zumindest einen Antrieb zum Antreiben einer Rotationsbewegung des Fräskopfs (260) aufweist; und wobei
der Antrieb zum Antreiben der Rotationsbewegung des Fräskopfs (260) als Torqueantrieb (261), insbesondere gekühlter Torqueantrieb, ausgebildet ist.

10. Spindelträgerbaugruppe gemäß einem der vorstehenden Ansprüche, **gekennzeichnet durch**
ein Werkzeugmagazin (300) zum Lagern von einer Mehrzahl von Werkzeugen zum Ein- bzw. Auswechseln von Werkzeugen an der Arbeitsspindel (210).

11. Spindelträgerbaugruppe gemäß einem der vorstehenden Ansprüche, **dadurch gekennzeichnet, dass**
zusätzlich zu einer ersten Spindelträgerbaugruppe (200), die den Schwenkarmaufnahmeabschnitt, den ersten Schwenkarm, den zweiten Schwenkarm, den Spindelträgerarm, den Fräskopf und die Arbeitsspindel umfasst, eine zweite Spindelträgerbaugruppe auf dem Maschinenbett angeordnet ist; und wobei
die zweite Spindelträgerbaugruppe umfasst:
- einen auf einem Maschinenbett der Werkzeugmaschine angeordneten zweiten Schwenkarmaufnahmeabschnitt,
- einem an dem zweiten Schwenkarmaufnahmeabschnitt um eine fünfte Rotationsachse schwenkbar gelagerten dritten Schwenkarm,
- einem an dem dritten Schwenkarm um eine sechste Rotationsachse schwenkbar gelagerten vierten Schwenkarm,
- einem an dem vierten Schwenkarm um eine siebte Rotationsachse drehbar gelagerten zweiten Spindelträgerarm,
- einem an dem zweiten Spindelträgerarm um eine achte Rotationsachse drehbar gelagerten zweiten Fräskopf, und
- einer an dem zweiten Fräskopf gehaltenen zweiten Arbeitsspindel zur Aufnahme eines Werkzeugs,
wobei die siebte Rotationsachse senkrecht oder quer zur achten Rotationsachse ausgerichtet ist.

12. Spindelträgerbaugruppe gemäß Anspruch 11, **dadurch gekennzeichnet, dass**
die erste, zweite, fünfte und sechste Rotationsachse jeweils parallel zueinander ausgerichtet sind, wobei insbesondere die erste und fünfte Rotationsachse koaxial zueinander ausgerichtet sind.

13. Spindelträgerbaugruppe gemäß Anspruch 11 oder 12, **dadurch gekennzeichnet, dass**
die erste und zweite Spindelträgerbaugruppe in der Richtung der ersten und/oder fünften Rotationsachse nebeneinander auf dem Maschinenbett angeordnet sind.

14. Werkzeugmaschine zur spanenden Bearbeitung eines Werkstücks, umfassend eine Spindelträgerbaugruppe zum Einsatz an der Werkzeugmaschine gemäß einem der Ansprüche 1 bis 13.
